# EUROPÄISCHE PATENTSCHRIFT

(11) **EP 3 242 059 B1**
(45) Veröffentlichungstag und Bekanntmachung des Hinweises auf die Patenterteilung: **04.03.2020**
(21) Anmeldenummer: 17165162.3
(22) Anmeldetag: 06.04.2017
(51) Int. Cl.: F16H 57/04, F16N 7/36

(54) **VORRICHTUNG MIT EINEM TRIBOLOGISCHEN KONTAKT UND VERFAHREN ZUM BETREIBEN EINER VORRICHTUNG MIT EINEM TRIBOLOGISCHEN KONTAKT**
DEVICE WITH A TRIBOLOGICAL CONTACT AND METHOD FOR OPERATING A DEVICE COMPRISING A TRIBOLOGICAL CONTACT
DISPOSITIF COMPRENANT UN CONTACT TRIBOLOGIQUE ET PROCÉDÉ DE FONCTIONNEMENT D'UN DISPOSITIF COMPRENANT UN CONTACT TRIBOLOGIQUE

(30) Priorität: 13.04.2016 DE 102016206141
(43) Veröffentlichungstag der Anmeldung: 08.11.2017
(73) Patentinhaber: Robert Bosch GmbH, 70442 Stuttgart (DE)
(72) Erfinder: Dornhoefer, Gerd, 71229 Leonberg (DE); Klima, Joachim, 77815 Buehl (DE); Hinterkausen, Markus, 71696 Moeglingen (DE)

(56) Entgegenhaltungen:
- EP-B1- 1 911 986
- CH-A- 325 576
- FR-A- 677 793
- US-A- 1 528 512
- US-A- 1 652 642
- US-A- 1 999 266

## Beschreibung

Die Erfindung betrifft eine Vorrichtung mit einem tribologischen Kontakt. Die Erfindung betrifft des Weiteren ein Verfahren zum Betreiben einer Vorrichtung mit einem tribologischen Kontakt.

### Stand der Technik

Es ist allgemein bekannt, dass Schmierstoffpräsenz in Reibkontakten bzw. tribologischen Kontakten in vielen Fällen erhebliche Vorteile wie beispielsweise verringerte Reibung, höheren Wirkungsgrad und geringere Wärmebelastung bringt. Ausreichend Schmierstoffpräsenz kann entweder dadurch erreicht werden, dass grundsätzlich immer Schmierstoff vorhanden ist, wie beispielsweise bei einer Öltauchschmierung, oder aber dass ein Volumenstrom an Schmierstoff, der dem Reibkontakt zugeführt wird, nicht kleiner ist als die Summe aus dem Volumenstrom, der von dem Reibkontakt abgeht, und Verlusten, wie beispielsweise Verdampfung und/oder chemische Umwandlung, es sei denn, der Nettoverlust ist pro Zeiteinheit so klein, dass eine initiale Schmierstoffmenge für eine Lebensdauer des Bauteils ausreicht.

Im Bereich fettgeschmierter oder Minimalölmengen-geschmierter Reibkontakte sind solche Schmierstofftransportvorgänge mit Nachteilen versehen. Bei einer aktiven Schmierstoffzuführung ist stets eine Pumpe zur Förderung des Schmierstoffs erforderlich. Bei einer passiven Schmierstoffzuführung spielen Oberflächenkräfte eine zentrale Rolle. Gefördert wird in der Regel über gekrümmte Oberflächen, über poröse Strukturen sowie über Oberflächenstrukturen.

Die EP 2 508 778 A2 offenbart ein Zahnrad, das in einer Drehachse gelagert ist und an dessen Umfang bevorzugt eine Vielzahl von Zähnen zum Übertragen eines Drehmoments an ein mit dem Zahnrad zusammenwirkendes Gegenelement angeordnet sind, wobei ein Reibbereich zwischen einem Zahn und dem Gegenelement an einer Zahnflankenoberfläche mit Schmiermittel versehen ist. Es ist vorgesehen, dass an der Zahnflankenoberfläche eine Längsrille zur Zuführung des Schmiermittels in Richtung zum Reibbereich ausgebildet ist. Bei einer solchen Oberflächenstruktur erfolgt die Leitung von Schmierstoff hin zu dem Reibkontakt über eine Kapillarkraft.

FR 677793 offenbart eine Pumpenanordnung zur Lagerschmierung eines elektrisch betriebenen Ventilators.

### Offenbarung der Erfindung

Die vorliegende Erfindung schafft eine Vorrichtung mit den Merkmalen des Anspruch 1.

Die vorliegende Erfindung schafft des Weiteren ein Verfahren mit den Merkmalen des Anspruch 8.

Eine Idee der vorliegenden Erfindung ist es, dem Reibkontakt durch die Relativbewegung des ersten Kontaktkörpers zu dem zweiten Kontaktkörper Schmiermittel bereitzustellen. Die Relativbewegung des ersten Kontaktkörpers zu dem zweiten Kontaktkörper ermöglicht somit, ein vorgegebenes Schmiermittelvolumen zur Schmierung des Reibkontaktes zu fördern. Die Relativbewegung des ersten Kontaktkörpers zu dem zweiten Kontaktkörper wirkt somit analog der Funktion einer Pumpe im Rahmen einer aktiven Schmierstoffzuführung. Somit können in vorteilhafter Weise Mangelschmierungszustände verringert werden. Des Weiteren kommt es vorzugsweise zu einer geringeren Temperaturentwicklung, weniger Verschleiß, einem höheren Wirkungsgrad, einer höheren Lebensdauer sowie weniger Ausfällen. Des Weiteren können in vorteilhafter Weise aktuelle Designgrenzen was Baugröße und Materialien betrifft verschoben werden. So kann die Baugröße der Kontaktkörper kleiner gewählt werden bzw. die Kontaktkörper leichter ausgebildet werden. Darüber hinaus müssen die verwendeten Materialien eine geringere Temperaturbeständigkeit bzw. Verschleißfestigkeit aufweisen. Dadurch können in vorteilhafter Weise die Herstellungskosten reduziert werden.

Vorteilhafte Ausführungsformen und Weiterbildungen ergeben sich aus den Unteransprüchen sowie aus der Beschreibung unter Bezugnahme auf die Figuren.

Aufgrund der relativ einfachen Oberflächengestaltung des Schmiermittelwegs ist dieser in vorteilhafter Weise kostengünstig herstellbar. Beispielsweise kann die Strukturierung in einem Spritzgießwerkzeug integriert sein.

Gemäß einer weiteren bevorzugten Weiterbildung ist vorgesehen, dass die zumindest abschnittsweise Strukturierung der Oberfläche des zweiten Kontaktkörpers zumindest einen Mikrokanal aufweist. Durch Vorsehen des Mikrokanals in der Oberfläche des zweiten Kontaktkörpers kann ein Fluss des Schmiermittels auf den Reibkontakt fokussiert bzw. ein Marangoni-Effekt abgeschwächt werden.

Gemäß einer weiteren bevorzugten Weiterbildung ist vorgesehen, dass die in dem Schmiermittelweg angeordnete Fluidsäule des Schmiermittels zusammen mit dem an dem ersten Kontaktkörper anhaftenden Schmiermittel eine zusammenhängende Fluidsäule ausbildet. Somit kann bei der Relativbewegung des ersten Kontaktkörpers zu dem zweiten Kontaktkörper das an dem ersten Kontaktkörper anhaftende Schmiermittel die in dem Schmiermittelweg angeordnete Fluidsäule in vorteilhafter Weise nachziehen.

Gemäß einer weiteren bevorzugten Weiterbildung ist vorgesehen, dass der Reibkontakt einen Zulauf zum Zuführen von Schmiermittel und einen Ablauf zum Abführen von Schmiermittel aufweist, wobei der Schmiermittelweg derart angeordnet ist, dass dieser am Zulauf des Reibkontaktes endet. Somit kann durch die Relativbewegung des ersten Kontaktkörpers zu dem zweiten Kontaktkörper eine erforderliche Menge an Schmiermittel über den Zulauf gefördert werden.

Gemäß einer weiteren bevorzugten Weiterbildung ist vorgesehen, dass der Schmiermittelweg in Verlängerung eines Flusses des Schmiermittels durch den Reibkontakt angeordnet ist. Dadurch kann in vorteilhafter Weise eine optimale und weitestgehend verlustfreie Schmiermittelzufuhr zum Reibkontakt ermöglicht werden.

Gemäß einer weiteren bevorzugten Weiterbildung ist vorgesehen, dass aus einem mit dem Schmiermittelweg verbundenen Schmiermitteldepot Schmiermittel nachförderbar ist. Somit kann in vorteilhafter Weise sichergestellt werden, dass die in dem Schmiermittelweg angeordnete Fluidsäule des Schmiermittels nicht abreißt.

Gemäß einer weiteren bevorzugten Weiterbildung ist vorgesehen, dass die Relativbewegung des ersten Kontaktkörpers zu dem zweiten Kontaktkörper rotatorisch oder translatorisch ist. Der Reibkontakt mit selbstschmierenden Eigenschaften findet somit beispielsweise in Zahnrädern und Getrieben, Kolben-Zylinder-Systemen, Lagerungen, Schnecke-Schraubenradkontakten, SpindelMutter-Kontakten etc. Anwendung.

Gemäß einer weiteren bevorzugten Weiterbildung ist vorgesehen, dass das Schmiermittel dem Reibkontakt durch einen Zulauf des Reibkontaktes zugeführt und einen Ablauf des Reibkontaktes abgeführt wird. Durch Vorsehen des Zulaufs und des Ablaufs kann somit vorzugsweise stets eine erforderliche Schmiermittelmenge zu einem Reibkontakt gefördert und von diesem wiederum abgeführt werden.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1: eine Querschnittsdarstellung eines Reibkontaktes gemäß einer bevorzugten Ausführungsform der Erfindung; und
- Fig. 2: ein Ablaufdiagramm eines Verfahrens zum Betreiben eines Reibkontaktes gemäß der bevorzugten Ausführungsform der Erfindung.

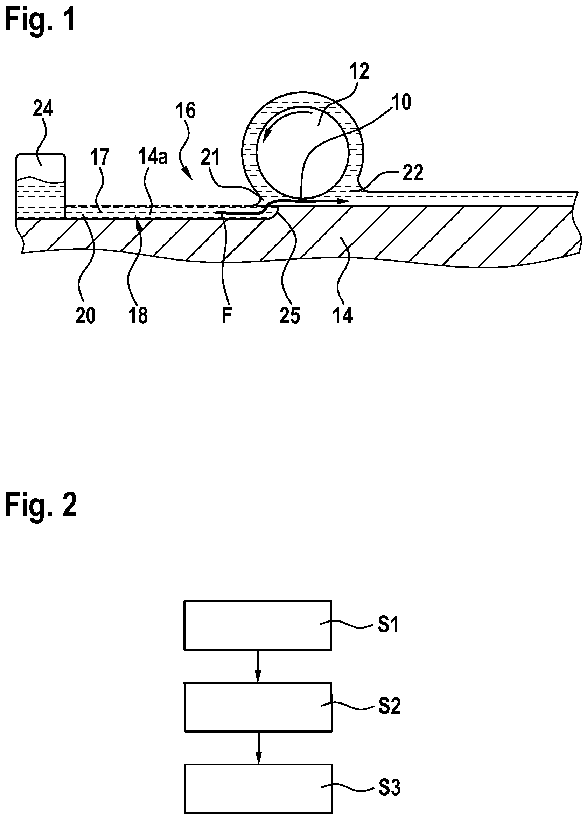

Fig. 1 zeigt eine Querschnittsdarstellung eines Reibkontaktes gemäß einer bevorzugten Ausführungsform der Erfindung. Die Vorrichtung 1 weist vorzugsweise einen Reibkontakt 10 mit einem ersten Kontaktkörper 12 und einem zweiten Kontaktkörper 14 auf. Der erste Kontaktkörper 12 ist vorzugsweise relativ zum zweiten Kontaktkörper 14 verstellbar. Eine Relativbewegung des ersten Kontaktkörpers 12 zum zweiten Kontaktkörper 14 ist in der vorliegenden Ausführungsform rotatorisch. Alternativ kann die Relativbewegung des ersten Kontaktkörpers 12 zum zweiten Kontaktkörper 14 beispielsweise translatorisch sein.

Der erste Kontaktkörper 12 weist vorzugsweise einen im Wesentlichen runden Querschnitt auf. Alternativ kann der erste Kontaktkörper 12 beispielsweise eine andere geeignete Querschnittsform aufweisen.

Der zweite Kontaktkörper 14 weist vorzugsweise einen im Wesentlichen ebenen Querschnitt auf. Benachbart zu dem Reibkontakt 10 ist ein zu dem Reibkontakt 10 führender Schmiermittelweg 16 zum Versorgen des Reibkontaktes 10 mit Schmiermittel 17 angeordnet.

Der Reibkontakt 10 ist vorzugsweise durch die Relativbewegung des ersten Kontaktkörpers 12 zu dem zweiten Kontaktkörper 14 mit Schmiermittel 17 versorgbar. An dem ersten Kontaktkörper 12 anhaftendes Schmiermittel 17 ist dabei dazu ausgebildet, eine mit dem Schmiermittel 17 verbundene, in dem Schmiermittelweg 16 angeordnete Fluidsäule des Schmiermittels 17 in Richtung der Relativbewegung zu fördern.

Der Schmiermittelweg 16 ist vorzugsweise an einem Abschnitt einer Oberfläche 14a des zweiten Kontaktkörpers 14 ausgebildet. Alternativ kann der Schmiermittelweg 16 beispielsweise an einer gesamten Oberfläche des zweiten Kontaktkörpers ausgebildet sein oder eine je nach volumetrischer Anforderung des Schmiermittelstroms angepasste Dimension aufweisen. Die Oberfläche 14a des zweiten Kontaktkörpers 14 weist zum Ausbilden des Schmiermittelwegs 16 eine abschnittsweise Strukturierung 18 auf. Die abschnittsweise Strukturierung 18 der Oberfläche 14a des zweiten Kontaktkörpers 14 weist eine Mehrzahl von Mikrokanälen 20 auf. Alternativ kann beispielsweise ein einzelner Mikrokanal bis zu einer beliebigen Anzahl von Mikrokanälen vorgesehen sein. Die Mehrzahl von Mikrokanälen 20 sind vorzugsweise parallel zueinander angeordnet und enden am Zulauf 21 des Reibkontaktes 10. Im Bereich zwischen Zulauf 21 und Ablauf 22 des Reibkontaktes 10 weist der zweite Kontaktkörper 14 vorzugsweise keine Strukturierung auf. Alternativ kann der zweite Kontaktkörper 14 auch im Bereich zwischen Zulauf 21 und Ablauf 22 des Reibkontaktes 10 eine geeignete Strukturierung aufweisen.

Die Mehrzahl von Mikrokanälen 20 des Schmiermittelwegs 16 sind des Weiteren vorzugsweise in Verlängerung eines Flusses F des Schmiermittels 17 durch den Reibkontakt 10 angeordnet.

Die in dem Schmiermittelweg 16 angeordnete Fluidsäule des Schmiermittels 17 bildet vorzugsweise zusammen mit dem an dem ersten Reibkörper 12 anhaftenden Schmiermittel 17 eine zusammenhängende Fluidsäule aus. Aus einem mit dem Schmiermittelweg 16 verbundenen Schmiermitteldepot 24 ist vorzugsweise Schmiermittel 17 nachförderbar. Durch die Relativbewegung des ersten Kontaktkörpers 12 zu dem zweiten Kontaktkörper 14 ist somit in vorteilhafter Weise Schmiermittel in Richtung der Relativbewegung förderbar. Der Reibkontakt 10 weist des Weiteren vorzugsweise den Zulauf 21 zum Zuführen von Schmiermittel 17 und einen Ablauf 22 zum Abführen von Schmiermittel 17 auf. Somit ist durch die Relativbewegung des ersten Kontaktkörpers 12 zu dem zweiten Kontaktkörper 14 eine erforderliche Menge an Schmiermittel 17 zu dem Reibkontakt 10 zuführbar und von dem Reibkontakt 10 abführbar.

Der Schmiermittelweg 16 weist an einem Übergang zum Zulauf 21 eine Abstufung 25 auf. Die Abstufung 25 weist im vorliegenden Ausführungsbeispiel eine abgerundete Kontur auf. Alternativ kann die Abstufung 25 beispielsweise eine andere geeignete Form aufweisen. Alternativ kann der Schmiermittelweg 16 am Übergang zum Zulauf 21 beispielsweise keine Abstufung aufweisen. Somit kann Schmiermittel 17 aus dem Schmiermittelweg 16 gefördert und gleichzeitig das an dem ersten Kontaktkörper 12 anhaftende Schmiermittel 17 dem Reibkontakt 10 zugeführt werden.

Fig. 2 zeigt ein Ablaufdiagramm eines Verfahrens zum Betreiben einer Vorrichtung mit einem Reibkontakt gemäß der bevorzugten Ausführungsform der Erfindung.
Das Verfahren zum Betreiben einer Vorrichtung mit einem Reibkontakt umfasst ein Bereitstellen S1 eines Reibkontaktes mit einem ersten Kontaktkörper und einem zweiten Kontaktkörper, wobei der erste Kontaktkörper relativ zum zweiten Kontaktkörper verstellbar ist. Das Verfahren umfasst des Weiteren ein Bereitstellen S2 eines mit dem Reibkontakt verbunden Schmiermittelwegs zum Versorgen des Reibkontaktes mit Schmiermittel. Das Verfahren umfasst überdies ein Versorgen S3 des Reibkontaktes mit Schmiermittel durch eine Relativbewegung des ersten Kontaktkörpers zu dem zweiten Kontaktkörper, wobei durch an dem ersten Kontaktkörper anhaftendes Schmiermittel eine damit verbundene, in dem Schmiermittelweg angeordnete Fluidsäule des Schmiermittels in Richtung der Relativbewegung gefördert wird.

Des Weiteren wird das Schmiermittel dem Reibkontakt durch einen Zulauf des Reibkontaktes zugeführt und durch einen Ablauf des Reibkontaktes von diesem abgeführt.

### Bezugszeichenliste

- 1: Vorrichtung
- 10: Reibkontakt
- 12: erster Kontaktkörper
- 14: zweiter Kontaktkörper
- 14a: Oberfläche
- 16: Schmiermittelweg
- 17: Schmiermittel
- 18: Strukturierung
- 20: Mikrokanal
- 21: Zulauf
- 22: Ablauf
- 24: Schmiermitteldepot
- 25: Abstufung
- F: Fluss

## Patentansprüche

1. Vorrichtung (1) mit einem tribologischen Kontakt (10) mit einem ersten Kontaktkörper (12) und einem zweiten Kontaktkörper (14), wobei der erste Kontaktkörper (12) relativ zum zweiten Kontaktkörper (14) verstellbar ist, und mit einem zu dem tribologischen Kontakt (10) führenden Schmiermittelweg (16) zum Versorgen des tribologischen Kontaktes (10) mit Schmiermittel (17), **dadurch gekennzeichnet, dass** der tribologische Kontakt (10) durch eine Relativbewegung des ersten Kontaktkörpers (12) zu dem zweiten Kontaktkörper (14) mit Schmiermittel (17) versorgbar ist, wobei durch an dem ersten Kontaktkörper (12) anhaftendes Schmiermittel (17) eine damit verbundene, in dem Schmiermittelweg (16) angeordnete Fluidsäule des Schmiermittels (17) in Richtung der Relativbewegung förderbar ist, wobei der Schmiermittelweg (16) zumindest teilweise an einer Oberfläche (14a) des zweiten Kontaktkörpers (14) ausgebildet ist, wobei die Oberfläche (14a) des zweiten Kontaktkörpers (14) zum Ausbilden des Schmiermittelweges (16) zumindest abschnittsweise eine Strukturierung (18) aufweist, wobei die zumindest abschnittsweise Strukturierung (18) der Oberfläche (14a) des zweiten Kontaktkörpers (14) eine Mehrzahl von Mikrokanälen (20) aufweist, und wobei die Mehrzahl von Mikrokanälen (20) parallel zueinander angeordnet sind und an einem Zulauf (21) des tribologischen Kontaktes (10) enden.

2. Vorrichtung nach Anspruch 1, **dadurch gekennzeichnet, dass** die zumindest abschnittsweise Strukturierung (18) der Oberfläche (14a) des zweiten Kontaktkörpers (14) zumindest einen Mikrokanal (20) aufweist.

3. Vorrichtung nach einem der vorhergehenden Ansprüche, **dadurch gekennzeichnet, dass** die in dem Schmiermittelweg (16) angeordnete Fluidsäule des Schmiermittels (17) zusammen mit dem an dem ersten Kontaktkörper (12) anhaftenden Schmiermittel (17) eine zusammenhängende Fluidsäule ausbildet.

4. Vorrichtung nach einem der vorhergehenden Ansprüche, **dadurch gekennzeichnet, dass** der tribologische Kontakt (10) einen Zulauf (21) zum Zuführen von Schmiermittel (17) und einen Ablauf (22) zum Abführen von Schmiermittel (17) aufweist, wobei der Schmiermittelweg (16) derart angeordnet ist, dass dieser am Zulauf (21) des tribologischen Kontaktes (10) endet.

5. Vorrichtung nach einem der vorhergehenden Ansprüche, **dadurch gekennzeichnet, dass** der Schmiermittelweg (16) in Verlängerung eines Flusses (F) des Schmiermittels (17) durch den tribologischen Kontakt (10) angeordnet ist.

6. Vorrichtung nach einem der vorhergehenden Ansprüche, **dadurch gekennzeichnet, dass** aus einem mit dem Schmiermittelweg (16) verbundenen Schmiermitteldepot (24) Schmiermittel (17) nachförderbar ist.

7. Vorrichtung nach einem der vorhergehenden Ansprüche, **dadurch gekennzeichnet, dass** die Relativbewegung des ersten Kontaktkörpers (12) zu dem zweiten Kontaktkörper (14) rotatorisch oder translatorisch ist.

8. Verfahren zum Betreiben einer Vorrichtung (1) mit einem tribologischen Kontakt (10), mit den Schritten:
Bereitstellen (S1) eines tribologischen Kontaktes (10), mit einem ersten Kontaktkörper (12) und einem zweiten Kontaktkörper (14), wobei der erste Kontaktkörper (12) relativ zum zweiten Kontaktkörper (14) verstellbar ist;
Bereitstellen (S2) eines mit dem tribologischen Kontakt (10) verbundenen Schmiermittelweges (16) zum Versorgen des tribologischen Kontaktes (10) mit Schmiermittel;
**gekennzeichnet durch**:
Versorgen (S3) des tribologischen Kontaktes (10) mit Schmiermittel (17) durch eine Relativbewegung des ersten Kontaktkörpers (12) zu dem zweiten Kontaktkörper (14), wobei durch an dem ersten Kontaktkörper (12) anhaftendes Schmiermittel (17) eine damit verbundene, in dem Schmiermittelweg (16) angeordnete Fluidsäule des Schmiermittels (17) in Richtung der Relativbewegung gefördert wird, wobei der Schmiermittelweg (16) zumindest teilweise an einer Oberfläche (14a) des zweiten Kontaktkörpers (14) bereitgestellt ist, wobei die Oberfläche (14a) des zweiten Kontaktkörpers (14) zum Ausbilden des Schmiermittelweges (16) zumindest abschnittsweise mit einer Strukturierung (18) bereitgestellt wird,
wobei die zumindest abschnittsweise Strukturierung (18) der Oberfläche (14a) des zweiten Kontaktkörpers (14) mit einer Mehrzahl von Mikrokanälen (20) bereitgestellt wird, und wobei die Mehrzahl von Mikrokanälen (20) parallel zueinander bereitgestellt werden und an einem Zulauf (21) des tribologischen Kontaktes (10) enden.

9. Verfahren nach Anspruch 8, **dadurch gekennzeichnet, dass** das Schmiermittel (17) dem tribologischen Kontakt (10) durch einen Zulauf (21) des tribologischen Kontaktes (10) zugeführt und einen Ablauf (22) des tribologischen Kontaktes (10) abgeführt wird.

## Claims

1. Device (1) having a tribological contact (10) with a first contact body (12) and with a second contact body (14), wherein the first contact body (12) is able to be adjusted relative to the second contact body (14), and having a lubricant path (16) which leads to the tribological contact (10) and which serves for supplying the tribological contact (10) with lubricant (17), **characterized in that** the tribological contact (10) is able to be supplied with lubricant (17) by way of a relative movement of the first contact body (12) with respect to the second contact body (14), wherein, by way of lubricant (17) adhering to the first contact body (12), a fluid column, connected to said lubricant and arranged in the lubricant path (16), of the lubricant (17) is able to be conveyed in the direction of the relative movement, wherein the lubricant path (16) is, at least partially, formed on a surface (14a) of the second contact body (14), wherein, for the formation of the lubricant path (16), the surface (14a) of the second contact body (14) has, at least sectionally, a structuring (18), wherein the at least sectional structuring (18) of the surface (14a) of the second contact body (14) has a plurality of microchannels (20), and wherein the plurality of microchannels (20) are arranged parallel to one another and end at an inflow (21) of the tribological contact (10).

2. Device according to Claim 1, **characterized in that** the at least sectional structuring (18) of the surface (14a) of the second contact body (14) has at least one microchannel (20).

3. Device according to either of the preceding claims, **characterized in that** the fluid column, arranged in the lubricant path (16), of the lubricant (17) forms, together with the lubricant (17) adhering to the first contact body (12), a cohesive fluid column.

4. Device according to one of the preceding claims, **characterized in that** the tribological contact (10) has an inflow (21) for feeding lubricant (17) and an outflow (22) for discharging lubricant (17), wherein the lubricant path (16) is arranged such that it ends at the inflow (21) of the tribological contact (10).

5. Device according to one of the preceding claims, **characterized in that** the lubricant path (16) is arranged in an extension of a flow (F) of the lubricant (17) through the tribological contact (10) .

6. Device according to one of the preceding claims, **characterized in that** follow-up conveyance of lubricant (17) is possible from a lubricant depot (24) connected to the lubricant path (16).

7. Device according to one of the preceding claims, **characterized in that** the relative movement of the first contact body (12) with respect to the second contact body (14) is rotational or translational.

8. Method for operating a device (1) having a tribological contact (10), comprising the steps of:
providing (S1) a tribological contact (10) with a first contact body (12) and a second contact body (14), wherein the first contact body (12) is able to be adjusted relative to the second contact body (14) ;
providing (S2) a lubricant path (16) which is connected to the tribological contact (10) and serves for supplying the tribological contact (10) with lubricant;
**characterized by**:
supplying (S3) the tribological contact (10) with lubricant (17) by way of a relative movement of the first contact body (12) with respect to the second contact body (14), wherein, by way of lubricant (17) adhering to the first contact body (12), a fluid column, connected to said lubricant and arranged in the lubricant path (16), of the lubricant (17) is conveyed in the direction of the relative movement,
wherein the lubricant path (16) is, at least partially, provided on a surface (14a) of the second contact body (14), wherein, for the formation of the lubricant path (16), the surface (14a) of the second contact body (14) is, at least sectionally, provided with a structuring (18), wherein the at least sectional structuring (18) of the surface (14a) of the second contact body (14) is provided with a plurality of microchannels (20), and wherein the plurality of microchannels (20) are provided parallel to one another and end at an inflow (21) of the tribological contact (10).

9. Method according to Claim 8, **characterized in that** the lubricant (17) is fed to the tribological contact (10) through an inflow (21) of the tribological contact (10) and is discharged therefrom through an outflow (22) of the tribological contact (10).

## Revendications

1. Dispositif (1) comprenant un contact tribologique (10) doté d'un premier corps de contact (12) et d'un deuxième corps de contact (14), le premier corps de contact (12) étant positionnable par rapport au deuxième corps de contact (14), et comprenant un chemin de lubrifiant (16) menant vers le contact tribologique (10) et servant à alimenter le contact tribologique (10) avec un lubrifiant (17), **caractérisé en ce que** le contact tribologique (10) peut être alimenté en lubrifiant (17) par un mouvement relatif du premier corps de contact (12) par rapport au deuxième corps de contact (14), une colonne de fluide du lubrifiant (17), reliée au premier corps de contact (12) et disposée dans le chemin de lubrifiant (16), pouvant être transportée par le lubrifiant (17) qui adhère à celui-ci dans la direction du mouvement relatif, le chemin de lubrifiant (16) étant au moins partiellement formé au niveau d'une surface (14a) du deuxième corps de contact (14), la surface (14a) du deuxième corps de contact (14) possédant au moins dans certaines portions une structuration (18) servant à former le chemin de lubrifiant (16), la structuration (18) au moins dans certaines portions de la surface (14a) du deuxième corps de contact (14) possédant une pluralité de microcanaux (20) et la pluralité de microcanaux (20) étant disposés en parallèle les uns des autres et se terminant au niveau d'un point d'alimentation (21) du contact tribologique (10).

2. Dispositif selon la revendication 1, **caractérisé en ce que** la structuration (18) au moins dans certaines portions de la surface (14a) du deuxième corps de contact (14) possède au moins un microcanal (20).

3. Dispositif selon l'une des revendications précédentes, **caractérisé en ce que** la colonne de fluide du lubrifiant (17) disposée dans le chemin de lubrifiant (16) forme, conjointement avec le lubrifiant (17) qui adhère au premier corps de contact (12), une colonne de fluide cohérente.

4. Dispositif selon l'une des revendications précédentes, **caractérisé en ce que** le contact tribologique (10) possède un point d'alimentation (21) servant à l'acheminement de lubrifiant (17) et un point d'écoulement (22) servant à l'évacuation du lubrifiant (17), le chemin de lubrifiant (16) étant disposé de telle sorte que celui-ci se termine au niveau du point d'alimentation (21) du contact tribologique (10).

5. Dispositif selon l'une des revendications précédentes, **caractérisé en ce que** le chemin de lubrifiant (16) est disposé dans la prolongation d'un flux (F) du lubrifiant (17) à travers le contact tribologique (10).

6. Dispositif selon l'une des revendications précédentes, **caractérisé en ce que** du lubrifiant (17) peut être transporté en complément à partir d'un dépôt de lubrifiant (24) relié au chemin de lubrifiant (16).

7. Dispositif selon l'une des revendications précédentes, **caractérisé en ce que** le mouvement relatif du premier corps de contact (12) par rapport au deuxième corps de contact (14) est rotatoire ou translatoire.

8. Procédé pour faire fonctionner un dispositif (1) comprenant un contact tribologique (10), comprenant les étapes suivantes :
fourniture (S1) d'un contact tribologique (10) doté d'un premier corps de contact (12) et d'un deuxième corps de contact (14), le premier corps de contact (12) étant positionnable par rapport au deuxième corps de contact (14) ;
fourniture (S2) d'un chemin de lubrifiant (16) relié au contact tribologique (10) servant à alimenter le contact tribologique (10) avec du lubrifiant ;
**caractérisé par** :
alimentation (S3) du contact tribologique (10) en lubrifiant (17) par un mouvement relatif du premier corps de contact (12) par rapport au deuxième corps de contact (14), une colonne de fluide du lubrifiant (17), reliée au premier corps de contact (12) et disposée dans le chemin de lubrifiant (16), étant transportée par le lubrifiant (17) qui adhère à celui-ci dans la direction du mouvement relatif, le chemin de lubrifiant (16) étant au moins partiellement fourni au niveau d'une surface (14a) du deuxième corps de contact (14), la surface (14a) du deuxième corps de contact (14) étant fournie avec, au moins dans certaines portions, une structuration (18) servant à former le chemin de lubrifiant (16), la structuration (18) au moins dans certaines portions de la surface (14a) du deuxième corps de contact (14) étant fournie avec une pluralité de microcanaux (20) et la pluralité de microcanaux (20) étant fournis en parallèle les uns des autres et se terminant au niveau d'un point d'alimentation (21) du contact tribologique (10).

9. Procédé selon la revendication 8, **caractérisé en ce que** le lubrifiant (17) est acheminé au contact tribologique (10) au travers d'un point d'alimentation (21) du contact tribologique (10) et évacué au travers d'un point d'écoulement (22) du contact tribologique (10).
